# EUROPEAN PATENT SPECIFICATION

(11) **EP 4 582 779 B1**
(45) Date of publication and mention of the grant of the patent: **08.07.2026**
(21) Application number: 24223422.7
(22) Date of filing: 27.12.2024
(51) Int. Cl.: G01K 1/14, H01M 10/48, H01M 10/42

(54) **TEMPERATURE SAMPLING ASSEMBLY, BATTERY, AND ELECTRIC APPARATUS**
TEMPERATURMESSVORRICHTUNG, BATTERIE UND ELEKTRISCHE VORRICHTUNG
ENSEMBLE D'ÉCHANTILLONNAGE DE TEMPÉRATURE, BATTERIE ET APPAREIL ÉLECTRIQUE

(30) Priority: 02.01.2024 CN 202410009900
(43) Date of publication of application: 09.07.2025
(73) Proprietor: Contemporary Amperex Technology Co., Limited, Ningde, Fujian 352100 (CN)
(72) Inventor: GAN, Weifeng, Ningde, 352100 (CN); ZHENG, Chenling, Ningde, 352100 (CN); WANG, Peng, Ningde, 352100 (CN); WANG, Yu, Ningde, 352100 (CN)
(74) Representative: Ran, Handong

(56) References cited:
- DE-A1- 102019 134 469
- US-A1- 2022 173 484
- US-A1- 2022 255 154

## Description

### TECHNICAL FIELD

This application pertains to the field of battery technologies, and particularly relates to a temperature sampling assembly, a battery, and an electric apparatus.

### BACKGROUND

In some cases, a temperature sensor can be fixed to a busbar component of a battery through an adhesive, to facilitate battery temperature sampling. However, with the use of batteries, the adhesive between the temperature sensor and the busbar component is easily lost and denatured under high temperatures, making the temperature sensor easily detaching from the busbar component, thus causing sampling accuracy decrease or sampling data loss of the temperature sensor.
United States Patent Application Publication No. 2022/0255154 A1, by Dong et al, discloses a temperature measurement module for measuring the temperature of a temperature measurement target. The module includes a flexible printed circuit board that includes an insulating sheet member and circuit patterns routed in the sheet member, a temperature sensor attached to the flexible printed circuit board, and a heat transfer member thermally fixed to the temperature sensor. The sheet member is provided with through holes located outward of a region overlapped with the temperature sensor, and the heat transfer member includes heat receiving portions that are arranged inside the through holes and receive heat from the temperature measurement target.

### SUMMARY

Embodiments of this application provide a temperature sampling assembly, a battery, and an electric apparatus to solve the problem that temperature sensors easily detach from busbar components and thus fail to implement reliable sampling.

To achieve the foregoing objective, the embodiments of this application adopt the following technical solutions.

A first aspect provides a temperature sampling assembly. The temperature sampling assembly includes:
a sampling circuit board, including a sampling part;
a temperature sensing chip, mounted at the sampling part and electrically connected to the sampling circuit board; and
a heat conducting base, where the heat conducting base includes a first side and a second side opposite each other in a thickness direction, the first side is fixedly adhered to the sampling part through a fixing adhesive, and the second side is configured to be connected to a to-be-sampled component.

According to the temperature sampling assembly provided in the embodiments of this application, the temperature sensing chip is mounted at the sampling part of the sampling circuit board, and the sampling part of the sampling circuit board is fixedly adhered to the first side of the heat conducting base through the fixing adhesive to form a modular structure. Based on this, the temperature sampling assembly can be modularly assembled independently of the to-be-sampled component. Especially during the operation of fixing the sampling part to the heat conducting base, at least one side of the sampling part in a circumferential direction can be flexibly coated with the fixing adhesive, ensuring that at least one side of the sampling part can be reliably fixed to the heat conducting base through sufficient fixing adhesive. Thus, when the second side of the heat conducting base is connected to the to-be-sampled component, the heat conducting base can conduct heat of the to-be-sampled component to the sampling part and the temperature sensing chip, allowing the temperature sensing chip to quickly and accurately collect a temperature of the to-be-sampled component. In addition, since at least one side of the sampling part is reliably fixed to the heat conducting base through sufficient fixing adhesive, the risk of excessive loss and denaturation of the fixing adhesive between the sampling part and the heat conducting base under high temperatures can be reduced, thereby reducing the risk of the sampling circuit board and the temperature sensing chip detaching from the heat conducting base, reducing the risk of sampling accuracy decrease or sampling data loss of the temperature sampling assembly, maintaining the sampling accuracy and sampling data accuracy of the temperature sampling assembly for a long time, and prolonging the service life of the temperature sampling assembly.

In some embodiments, the fixing adhesive covers at least two sides of the sampling part in a circumferential direction.

With the use of this solution, the fixing adhesive covers at least two sides of the sampling part in the circumferential direction, so that a plurality of sides of the sampling part can be covered by the fixing adhesive, and the sampling part can be partially covered or even totally covered by the fixing adhesive. This allows for more sufficient fixing adhesive between the sampling part and the heat conducting base, realizing a wider coverage range, thereby improving the reliability and firmness of adhesion realized by the fixing adhesive between the sampling part and the heat conducting base, reducing the risk of excessive loss and denaturation of the fixing adhesive between the sampling part and the heat conducting base under high temperatures, reducing the risk of the sampling part detaching from the heat conducting base, reducing the risk of sampling accuracy decrease or sampling data loss of the temperature sampling assembly, maintaining the sampling accuracy and sampling data accuracy of the temperature sampling assembly for a long time, and prolonging the service life of the temperature sampling assembly.

In some embodiments, the fixing adhesive is an insulating adhesive.

With the use of this solution, the fixing adhesive is an insulating adhesive, so that the fixing adhesive has good stability and durability and can realize reliable fixed connection of the sampling part to the heat conducting base, thereby improving the connection stability and connection reliability between the sampling part and the heat conducting base. In addition, the fixing adhesive can have good insulating properties and can provide electrical insulation, thereby reducing the risk of mutual interference between different signals in the sampling part, reducing the risk of short circuits, and improving the use performance of the temperature sampling assembly. Moreover, the fixing adhesive can form an insulating layer on at least one side of the sampling part in the circumferential direction to protect the sampling part and components on the sampling part, thereby reducing the risk of the sampling part and the components on the sampling part being affected by moisture or interference, and prolonging the service life of the temperature sampling assembly.

In some embodiments, the fixing adhesive is an insulating sealant.

With the use of this solution, the fixing adhesive is an insulating sealant, so that the fixing adhesive has good stability and durability and can realize reliable fixed connection of the sampling part to the heat conducting base, thereby improving the connection stability and connection reliability between the sampling part and the heat conducting base. In addition, the fixing adhesive can have good insulating properties and can protect electrical insulation protection, thereby reducing the risk of mutual interference between different signals in the sampling part, and reducing the risk of the sampling part and the components on the sampling part being affected by electrical faults or short circuits. Moreover, the fixing adhesive can have good sealing performance and can provide sealing protection, thereby protecting the sampling part and the components on the sampling part from dust, water, and the like, and reducing the risk of damage to the sampling part and the components on the sampling part caused by dust, moisture, moist air, and the like. Furthermore, the fixing adhesive can have good high temperature resistance and chemical corrosion resistance, and the fixing adhesive can maintain stable performance in severe environments, thereby reducing the risk of excessive loss and denaturation of the fixing adhesive under high temperatures, and reducing the risk of the sampling part detaching from the heat conducting base.

In some embodiments, the fixing adhesive covers the temperature sensing chip.

With the use of this solution, when the fixing adhesive has insulating properties, the fixing adhesive is used to cover the temperature sensing chip, so that the fixing adhesive can protect the temperature sensing chip, thereby reducing the risk of damage to the temperature sensing chip caused by external environmental influence such as dust, moisture, and moist air, and reducing the risk of damage to the temperature sensing chip caused by an external impact or vibration. In addition, the fixing adhesive can provide electrical insulation protection for the temperature sensing chip, thereby reducing the risk of short circuits between the temperature sensing chip and another component or circuit. Thus, the use reliability of the temperature sensing chip can be improved, and the service life of the temperature sensing chip can be prolonged.

The first side is provided with a groove, where at least one end of the groove in an extension direction of the groove is in communication with the outside, the sampling part is mounted in the groove, and the fixing adhesive fills the groove.

With the use of this solution, the first side of the heat conducting base is provided with the groove, and at least one end of the groove in the extension direction of the groove is in communication with the outside, facilitating penetration and mounting of the sampling part of the sampling circuit board in the groove. This allows the sampling part to be limited through the groove, thereby reducing the risk of the sampling part deviating and detaching from the heat conducting base due to an external impact or vibration, and improving the connection stability and connection reliability between the sampling part and the heat conducting base. In addition, the groove can be conveniently filled with the fixing adhesive. Based on this, the fixing adhesive can be gathered, allowing the fixing adhesive to cover at least one side of the sampling part in the circumferential direction, thereby facilitating reliable fixed connection between the sampling part and the groove through sufficient fixing adhesive, expanding a connection area between the sampling part and the groove, and improving the connection stability and connection reliability between the sampling part and the heat conducting base. Moreover, when the fixing adhesive is slightly melted under a high temperature, the groove can guide the extension of the fixing adhesive and limit excessive loss of the fixing adhesive, thereby reducing the risk of excessive loss and denaturation of the fixing adhesive between the sampling part and the heat conducting base under high temperatures, and reducing the risk of the sampling part detaching from the heat conducting base.

The first side is provided with two ribs protruding in a direction away from the second side, where the two ribs are spaced apart, and the groove is formed between the two ribs.

With the use of this solution, the first side is provided with the two ribs, so that the ribs can enhance the structural strength and rigidity of the heat conducting base, improving the structural reliability of the heat conducting base, and prolonging the service life of the heat conducting base. In addition, the groove is enclosed by the two ribs spaced apart, so that the groove can be quickly and conveniently molded without sacrificing the structural strength and rigidity of the heat conducting base, thereby improving the molding convenience of the groove and maintaining the strength and structural reliability of the heat conducting base.

The rib includes a hollow part which is through along the extension direction of the groove.

With the use of this solution, the rib includes the hollow part which is through along the extension direction of the groove, so that the weight of the rib can be effectively reduced, thereby facilitating weight reduction of the heat conducting base and facilitating lightening of the temperature sampling assembly.

**In** some embodiments, the hollow part penetrates to the second side.

With the use of this solution, the hollow part penetrates to the second side, so that the rib including the hollow part can be quickly and conveniently molded from the second side through punching, bending, or the like, thereby improving the molding convenience of the rib.

In some embodiments, the sampling circuit board includes an extension part and an output part, where the extension part is connected between the sampling part and the output part, and at least part of the extension part is a flexible circuit board and extends in a curved manner.

With the use of this solution, the sampling circuit board can receive temperature data measured by the temperature sensing chip through the sampling part and convert the temperature data into an electrical signal. The sampling circuit board can also transmit the electrical signal converted by the sampling part to the output part through the extension part and output the electrical signal outward through the output part. Based on this, the sampling circuit board, with a simplified and reliable structure, can convert the temperature data collected by the temperature sensing chip into an electrical signal and transmit the electrical signal.

Based on this, at least part of the extension part is a flexible circuit board and extends in a curved manner, so that this part of the extension part can form a stress-resistant structure and an expansion-resistant structure, allowing for reservation of length variations. Based on this, when the to-be-sampled component experiences vibration or expansion during use, the part of the extension part that is a flexible circuit board and extends in a curved manner can adapt to a change of a distance between the to-be-sampled component and an external component connected to the output part, to adaptively undergo stretch or contraction deformation, thereby effectively releasing stress received by the sampling circuit board, reducing the risk of damage and breakage of the sampling circuit board caused by the vibration or expansion of the to-be-sampled component, and prolonging the service life of the sampling circuit board and the temperature sampling assembly.

In some embodiments, the sampling circuit board is a flexible circuit board.

With the use of this solution, the sampling circuit board is a flexible circuit board, so that the sampling circuit board can have good flexibility and bending performance and thus the sampling circuit board is applicable to complicated spaces and narrow spaces, thereby expanding the application range of the sampling circuit board, and expanding the application range of the temperature sampling assembly. In addition, the sampling circuit board can have good anti-interference capability in vibration and impact environments, so that the structural reliability and use reliability of the sampling circuit board can be optimized. Moreover, molding of sampling circuit boards of various complicated shapes can be facilitated, and the design flexibility, design freedom degree, processing convenience, and portability of the sampling circuit board can be improved.

In some embodiments, the second side is connected to the to-be-sampled component through welding or through a fastener.

With the use of this solution, the second side of the heat conducting base can be connected to the to-be-sampled component through welding or through a fastener. Based on this, the connection reliability and connection firmness between the second side of the heat conducting base and the to-be-sampled component can be improved, and the connection between the second side and the to-be-sampled component is not prone to failure under high temperatures, thereby reducing the risk of the heat conducting base detaching from the to-be-sampled component, and reducing the risk of sampling accuracy decrease or sampling data loss of the temperature sampling assembly.

In some embodiments, the temperature sensing chip is disposed at a side of the sampling part facing away from the heat conducting base.

With the use of this solution, the temperature sensing chip is disposed on the side of the sampling part facing away from the heat conducting base, so that the temperature sensing chip is not in direct contact with the heat conducting base, reducing the possibility of the temperature sensing chip being damaged by the heat conducting base due to impact or vibration, improving the use reliability of the temperature sampling assembly, and prolonging the service life of the temperature sensing chip and the temperature sampling assembly.

In some embodiments, the temperature sensing chip is welded to the sampling part.

With the use of this solution, the temperature sensing chip is welded to the sampling part, so that the temperature sensing chip can be firmly and compactly fixed to the sampling part. This can reduce the risk of the temperature sensing chip detaching from the sampling part, maintain the reliability of data transmission between the temperature sensing chip and the sampling part, and improve the sampling accuracy and sampling data accuracy of the temperature sampling assembly.

In some embodiments, the heat conducting base is a sheet structure.

With the use of this solution, the heat conducting base is a sheet structure, so that a surface area of the heat conducting base can be increased, thereby improving the heat exchange efficiency between the heat conducting base and the to-be-sampled component, and improving the heat conduction efficiency. In addition, the rigidity and strength of the heat conducting base can be enhanced, so that the heat conducting base can withstand pressure and load, facilitating the processing of some detailed structures (such as the ribs) on the heat conducting base, thereby improving the processing convenience and service life of the heat conducting base. Moreover, the weight of the heat conducting base can be reduced, thereby facilitating the lightening of the temperature sampling assembly.

A second aspect provides a battery. The battery includes the temperature sampling assembly provided in the embodiments of this application.

With the use of this solution, the battery uses the temperature sampling assembly provided in the embodiments of this application, so that the modularized temperature sampling assembly that is less likely to detach under high temperatures can durably, reliably and accurately measure the temperature of the battery and reduce the risk of sampling accuracy decrease or sampling data loss. Thus, an overheating or overcooling situation of the battery can be discovered in a timely manner, the use safety of the battery can be improved, the performance such as cycle life, charge/discharge efficiency, and power density of the battery can be improved, and the charge/discharge strategy and energy utilization efficiency of the battery can be optimized.

In some embodiments, the battery includes a battery cell, where the second side of the heat conducting base is connected to a housing of the battery cell through welding or through a fastener.

With the use of this solution, the second side of the heat conducting base can be connected to the housing of the battery cell through welding or through a fastener. Based on this, the connection reliability and connection firmness between the second side of the heat conducting base and the housing of the battery cell can be improved, and the connection between the second side and the housing of the battery cell is not prone to failure under high temperatures, thereby reducing the risk of the heat conducting base detaching from the housing of the battery cell, and reducing the risk of sampling accuracy decrease or sampling data loss of the temperature sampling assembly, so that the heat conducting base can durably and reliably conduct the temperature of the battery cell to the temperature sensing chip directly, and the temperature sampling assembly can durably, reliably, and accurately measure the temperature of the battery cell directly.

In some embodiments, the battery includes a busbar component electrically connected to the battery cell, and the second side of the heat conducting base is connected to the busbar component through welding or through a fastener.

With the use of this solution, the second side of the heat conducting base can be connected to the busbar component through welding or through a fastener. Based on this, the connection reliability and connection firmness between the second side of the heat conducting base and the busbar component can be improved. In addition, the connection between the second side and the busbar component is not prone to failure under high temperatures, thereby reducing the risk of the heat conducting base detaching from the busbar component, and reducing the risk of sampling accuracy decrease or sampling data loss of the temperature sampling assembly, so that the heat conducting base can durably and reliably conduct the temperature of the battery cell connected to the busbar component to the temperature sensing chip through the busbar component, thereby allowing the temperature sampling assembly to durably, reliably, and accurately measure the temperature of the battery.

A third aspect provides an electric apparatus. The electric apparatus includes the battery provided in the embodiments of this application.

With the use of this solution, the electric apparatus can be improved in use safety, optimal performance, and energy utilization efficiency by using the battery provided in the embodiments of this application.

### BRIEF DESCRIPTION OF DRAWINGS

To describe the technical solutions in the embodiments of this application more clearly, the following briefly describes the accompanying drawings required for describing the embodiments or the prior art. Apparently, the accompanying drawings in the following description show only some embodiments of this application, and persons of ordinary skill in the art may still derive other drawings from these accompanying drawings without creative efforts.
FIG. 1 is a schematic structural diagram of a vehicle according to some embodiments of this application;
FIG. 2 is a schematic exploded view of a battery according to some embodiments of this application;
FIG. 3 is a partial schematic diagram of a battery according to some embodiments of this application, where an electrical connection relationship is established between battery cells through a busbar component;
FIG. 4 is a schematic exploded view of a battery cell according to some embodiments of this application;
FIG. 5 is a schematic structural diagram of a temperature sampling assembly according to some embodiments of this application;
FIG. 6 is a schematic diagram of a partial structure of the temperature sampling assembly provided in FIG. 5; and
FIG. 7 is a schematic diagram of cooperation of a temperature sampling assembly and a battery cell according to some embodiments of this application.

Reference signs in the figures:
1. battery; 2. controller; 3. motor; 100. battery unit; 200. box; 201. first portion; 202. second portion;
10. battery cell; 11. housing; 111. housing body; 112. end cover; 12. electrode assembly; 121. electrode body; 122. tab; 122a. positive electrode tab; 122b. negative electrode tab; 13. insulating member; 14 electrode terminal; 14a. positive electrode terminal; 14b. negative electrode terminal; 15. adapter; 15a. positive electrode adapter; 15b. negative electrode adapter; 16. explosion-proof valve;
20. busbar component;
30. temperature sampling assembly; 31. sampling circuit board; 311. sampling portion; 312. extension part; 313. output part; 3131. output branch; 3132. output port; 32 temperature sensing chip; 33. heat conducting base; 331. first side; 332. groove; 333. rib; 3331. hollow part; 334. second side; 34. fixing adhesive; y. thickness direction of the heat conducting base; and x. extension direction of the groove.

### DESCRIPTION OF EMBODIMENTS

To make the to-be-resolved technical problems, the technical solutions, and the beneficial effects of this application clear, this application is described in detail below with reference to the accompanying drawings and embodiments. It should be understood that the specific embodiments described herein are merely used to explain this application rather than to limit this application.

In the descriptions of this application, it should be understood that the orientations or positional relationships indicated by the terms "length", "width", "upper", "lower", "front", "rear", "left", "right", "perpendicular", "horizontal", "top", "bottom", "inside", "outside", and the like are based on the orientations or positional relationships shown in the accompanying drawings. These terms are merely for ease and brevity of the descriptions of this application rather than indicating or implying that the apparatuses or components mentioned must have specific orientations or must be constructed or manipulated according to specific orientations, and therefore shall not be construed as any limitation on this application.

In addition, the terms "first" and "second" are merely for the purpose of description and shall not be understood as any indication or implication of relative importance or any implicit indication of the quantity of the technical features indicated. Therefore, a feature limited by "first" or "second" may explicitly or implicitly include one or at least two such features. In the descriptions of this application, "at least two" means two or more unless otherwise specifically stated.

In the descriptions of this application, unless otherwise specified and defined explicitly, the terms "mounting", "connection", "join", and "fastening" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in this application as appropriate to specific situations.

In this application, the battery may be the smallest unit for storing and outputting electrical energy, that is, a battery cell. The battery may alternatively be a modular structure including at least one battery cell to provide a higher voltage and capacity, for example, a battery unit, a battery module, a battery assembly, or a battery pack. Different battery cells can be electrically connected through a busbar component (such as a busbar), achieving a parallel connection, a series connection, or a series-parallel connection. The series-parallel connection refers to a combination of a series connection and a parallel connection.

In some cases, a temperature sensor can be fixed to a busbar component of a battery through an adhesive, and under the limitation of the busbar component, an adhesive coated region of the temperature sensor is a side of the temperature sensor facing the busbar component. Based on this, the temperature of the battery can be transmitted to the temperature sensor through the busbar component, allowing the temperature sensor to conveniently collect the temperature of the battery. However, with the use of the battery, especially with long-term charge and discharge of the battery, the battery, especially a busbar component has a high temperature. As a result, the adhesive between the temperature sensor and the busbar component is easily lost and denatured under high temperatures, causing the temperature sensor to easily detach from the busbar component, thereby resulting in sampling accuracy decrease or sampling data loss of the temperature sensor.

Therefore, some embodiments of this application provide a temperature sampling assembly. The temperature sampling assembly can form a modular structure by mounting the temperature sensing chip at the sampling part of the sampling circuit board and fixedly adhering the sampling part of the sampling circuit board to the first side of the heat conducting base through a fixing adhesive. Based on this, the temperature sampling assembly can be modularly assembled independently of the to-be-sampled component. Especially during the operation of fixing the sampling part to the heat conducting base, at least one side of the sampling part in a circumferential direction can be flexibly coated with the fixing adhesive, ensuring that at least one side of the sampling part can be reliably fixed to the heat conducting base through sufficient fixing adhesive. Thus, when the second side of the heat conducting base is connected to the to-be-sampled component, the heat conducting base can conduct heat of the to-be-sampled component to the sampling part and the temperature sensing chip, allowing the temperature sensing chip to quickly and accurately collect a temperature of the to-be-sampled component. In addition, since at least one side of the sampling part is reliably fixed to the heat conducting base through sufficient fixing adhesive, the risk of excessive loss and denaturation of the fixing adhesive between the sampling part and the heat conducting base under high temperatures can be reduced, thereby reducing the risk of the sampling circuit board and the temperature sensing chip detaching from the heat conducting base, reducing the risk of sampling accuracy decrease or sampling data loss of the temperature sampling assembly, maintaining the sampling accuracy and sampling data accuracy of the temperature sampling assembly for a long time, and prolonging the service life of the temperature sampling assembly.

The temperature sampling assembly disclosed in the embodiments of this application can be used for batteries, especially for collecting the temperature of batteries.

The battery disclosed in the embodiments of this application can be the smallest unit for storing and outputting electrical energy, that is, a battery cell. The battery cell may be a lithium-ion secondary battery, a lithium-sulfur battery, a sodium-lithium-ion battery, a sodium-ion battery, a magnesium-ion battery, or the like. The battery cell may be cylindrical, flat, cuboid, or of other shapes. The battery cell can be packaged in different manners to form a cylindrical battery cell, a prismatic battery cell, a pouch battery cell, or the like.

The battery disclosed in the embodiments of this application may alternatively be a modular structure including at least one battery cell to provide a higher voltage and capacity, for example, a battery unit, a battery module, battery assembly, or a battery pack.

The battery disclosed in the embodiments of this application may be used for electric apparatuses that use a battery as a power source or various energy storage systems that use a battery as an energy storage element. The electric apparatus may be, but is not limited to, a vehicle, a mobile phone, a portable device, a laptop, a ship, a spacecraft, an electric toy, and an electric tool. The vehicle may be a fossil fuel vehicle, a natural-gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, and an electric toy airplane. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer.

To illustrate the technical solutions provided in this application, detailed description is given below with reference to the specific accompanying drawings and embodiments, and "the electric apparatus is a vehicle" is used as an example.

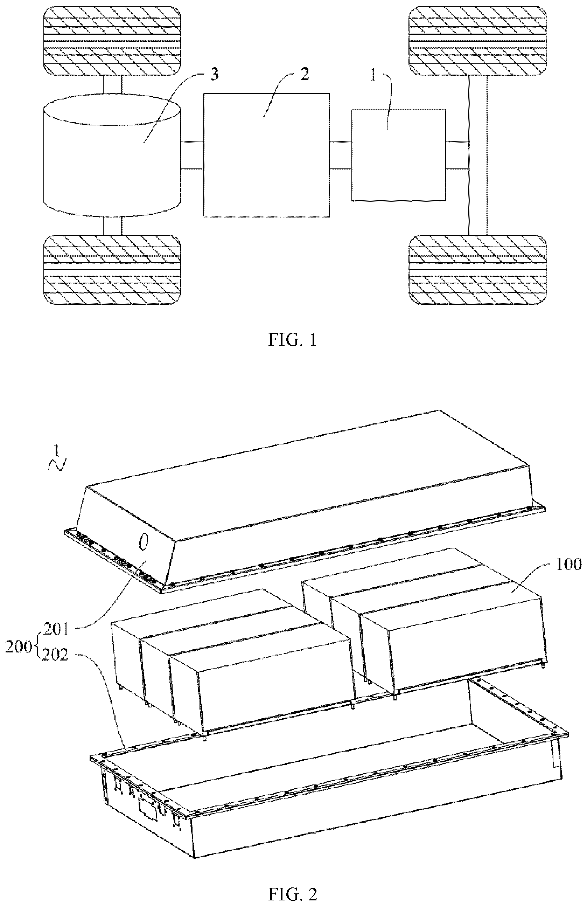

Refer to FIG. 1. FIG. 1 is a schematic structural diagram of a vehicle according to some embodiments of this application. The vehicle may be a fossil fuel vehicle, a natural-gas vehicle, or a new energy vehicle. The new energy vehicle may be a battery electric vehicle, a hybrid electric vehicle, a range-extended electric vehicle, or the like. The vehicle is provided with a battery 1 inside, where the battery 1 may be disposed at the bottom, front, or rear of the vehicle. The battery 1 is configured to supply power to the vehicle. For example, the battery 1 may be used as an operational power source for the vehicle. The vehicle may further include a controller 2 and a motor 3, where the controller 2 is configured to control the battery 1 to supply power to the motor 3, for example, to satisfy operating power needs for start, navigation, and driving of the vehicle.

In some embodiments of this application, the battery 1 can be used as not only the operational power source for the vehicle but also a driving power source for the vehicle, replacing or partially replacing fossil fuel or natural gas to provide driving traction for the vehicle.

Refer to FIG. 2. FIG. 2 is a schematic exploded view of a battery 1 according to some embodiments of this application. The battery 1 includes a battery unit 100 and a box 200, where the battery unit 100 is accommodated in the box 200.

The box 200 is configured to provide an accommodating space for components such as the battery unit 100. The box 200 can protect the components such as the battery unit 100 accommodated therein from dust and water, thereby reducing the influence of external liquid or other foreign matter on the effectiveness and performance of the components such as the battery unit 100, and effectively prolonging the service life of the battery 1.

The box 200 may be a variety of structures. In some embodiments, the box 200 may include a first portion 201 and a second portion 202. The first portion 201 and the second portion 202 fit together such that the first portion 201 and the second portion 202 jointly define an accommodating space for accommodating the battery unit 100. The second portion 202 may be a hollow structure with one end open, and the first portion 201 may be a plate structure. The first portion 201 covers the open side of the second portion 202, so that the first portion 201 and the second portion 202 jointly define the accommodating space. Alternatively, the first portion 201 and the second portion 202 may each be a hollow structure with one side open, and the open side of the first portion 201 covers the open side of the second portion 202.

The box 200 may be of various shapes, such as a cylinder or a cuboid.

The box 200 may be made of various materials, for example, copper, iron, aluminum, stainless steel, aluminum alloy, or plastic.

The battery unit 100 is an energy storage unit capable of converting chemical energy into electrical energy. In the battery 1, one or at least two battery units 100 may be provided. When at least two battery units 100 are provided, the at least two battery units 100 may be connected in series, parallel, or series-parallel. The series-parallel connection refers to a combination of a series connection and a parallel connection.

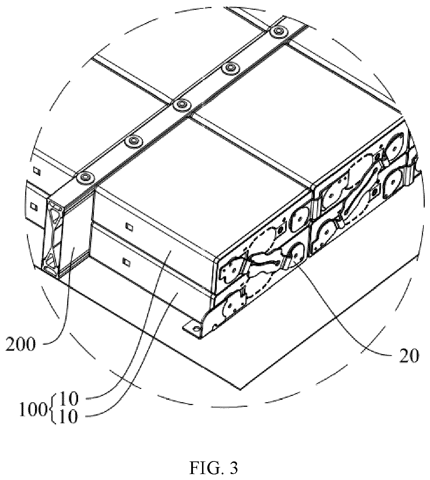

As shown in FIG. 3, the battery unit 100 may be the smallest unit for storing and outputting electrical energy, that is, a battery cell 10, or may be a modular structure including at least one battery cell 10 to provide a higher voltage and capacity, for example, a battery module or a battery assembly.

The battery cell 10 may be a lithium-ion secondary battery, a lithium-sulfur battery, a sodium-lithium-ion battery, a sodium-ion battery, a magnesium-ion battery, or the like. The battery cell 10 may be cylindrical, flat, cuboid, or of other shapes. The battery cell 10 can be packaged in different manners to form a cylindrical battery cell, a prismatic battery cell, a pouch battery cell, or the like.

At least two battery cells 10 can be connected in series, parallel, or series-parallel through a busbar component 20. The busbar component 20 may be but is not limited to a busbar.

Certainly, the battery 1 may further include another structure. For example, the battery 1 may further include a power distribution apparatus (not shown in the figure) serving as a control unit for distributing energy of the battery 1 so as to implement high voltage distribution for the battery 1.

Certainly, in some embodiments, the battery 1 may not include the box 200. Instead, at least two battery cells 10 are electrically connected to form an entirety through a necessary fixing structure, and then the entirety is assembled into an electric apparatus.

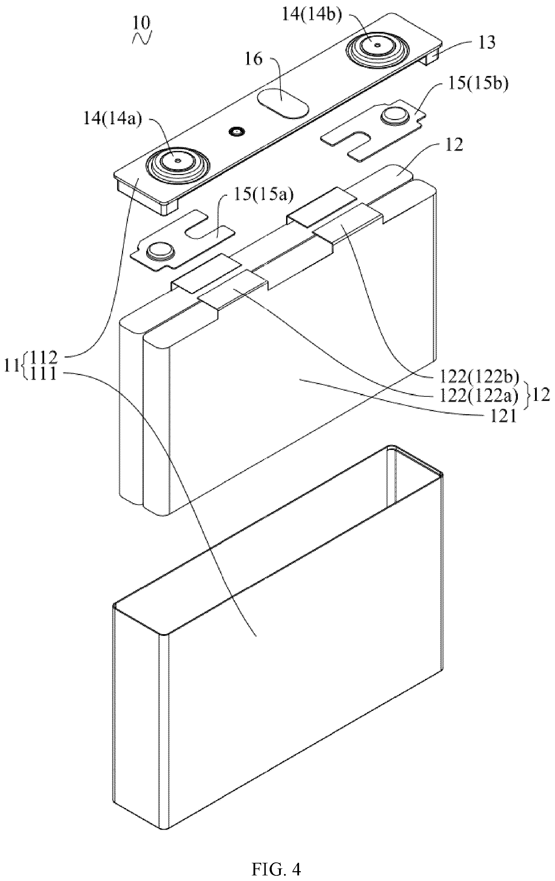

Refer to FIG. 4. FIG. 4 is a schematic exploded view of a battery cell 10 according to some embodiments of this application. The battery cell 10 is the smallest unit for storing and outputting electrical energy. The battery cell 10 includes components such as a housing 11, an electrode assembly 12, an insulating member 13, an electrode terminal 14, an adapter 15, an explosion-proof valve 16, and an electrolyte (not shown in the figure).

The housing 11 is a component that isolates the internal environment of the battery cell 10 from the external environment. The housing 11 may include a housing body 111 and an end cover 112. The end cover 112 is a component that covers an opening of the housing body 111 to isolate the internal environment of the battery cell 10 from the external environment. In some embodiments, the end cover 112 adapts to the housing body 111 in shape so as to fit the housing body 111. In some embodiments, the end cover 112 may be made of a material with given hardness and strength, so that the end cover 112 is less likely to deform when subjected to extrusion and collision, allowing the battery cell 10 to have higher structural strength and enhanced safety performance. The end cover 112 may be made of diversified materials. The end cover 112 may be made of a material such as copper, iron, aluminum, stainless steel, aluminum alloy, or plastic.

The housing body 111 is a component configured to form the internal environment of the battery cell 10 together with the end cover 112. The internal environment enclosed by the housing body 111 and the end cover 112 can be used to accommodate components such as the electrode assembly 12, the insulating member 13, and the electrolyte. In some embodiments, the housing body 111 and the end cover 112 may be separate components, an opening may be provided in the housing body 111, and the end cover 112 covers the opening to form the internal environment of the battery cell 10. In some embodiments, the end cover 112 and the housing body 111 may also be integrated. Specifically, the end cover 112 and the housing body 111 may form a shared connection surface before other components are disposed inside the housing, and then the end cover 112 covers the housing body 111 when inside of the housing body 111 needs to be enclosed. The housing body 111 may be of various shapes and sizes, for example, a cuboid, a cylinder, or a hexagonal prism. The shape of the housing body 111 may be determined according to a specific shape and size of the electrode assembly 12. The housing body 111 may be made of diversified materials. The housing body 111 may be made of a material such as copper, iron, aluminum, stainless steel, aluminum alloy, or plastic.

The electrode assembly 12 is a component in which electrochemical reactions take place in the battery cell 10. One or at least two electrode assemblies 12 may be provided in the housing 11. The electrode assembly 12 includes a positive electrode plate (not shown in the figure), a negative electrode plate (not shown in the figure), and a separator (not shown in the figure), and the separator separates the positive electrode plate from the negative electrode plate. The positive electrode plate, the separator, and the negative electrode plate may be made into an electrode assembly 12 through winding, lamination, or other methods. In the electrode assembly 12, portions of the positive electrode plate and the negative electrode plate with active substances constitute an electrode body 121 of the electrode assembly 12, while portions of the positive electrode plate and the negative electrode plate without active substances each constitute a tab 122. The tab 122 is a current transmission end of the electrode assembly 12 and is configured to transmit current. The tab 122 of the positive electrode plate is a positive electrode tab 122a, and the tab 122 of the negative electrode plate is a negative electrode tab 122b. The positive electrode tab 122a and the negative electrode tab 122b are both located at one end of the electrode body 121 or are respectively located at two ends of the electrode body 121.

The electrolyte is a liquid that infiltrates the electrode assembly 12. The battery cell 10 works mainly relying on migration of active ions between the positive electrode plate and the negative electrode plate. During charging of the battery cell 10, the positive electrode plate generates active ions, and the active ions provided by the positive electrode plate can penetrate through pores of the separator to move to the negative electrode plate through the electrolyte, and intercalate into a negative electrode active substance of the negative electrode plate. On the contrary, during discharging of the battery cell 10, the active ions interacting into the negative electrode active substance of the negative electrode plate are released, and the active ions released from the negative electrode plate can penetrate through the pores of the separator to move to the positive electrode plate through the electrolyte, and intercalate into a positive electrode active substance of the positive electrode plate. The active ions may be lithium ions, sodium ions, or the like.

The electrode terminal 14 is a component that is electrically connected to the electrode assembly 12 for outputting or inputting electrical energy. The electrode terminal 14 includes a positive electrode terminal 14a and a negative electrode terminal 14b. The positive electrode terminal 14a is electrically connected to the positive electrode tab 122a of the electrode assembly 12. The negative electrode terminal 14b is electrically connected to the negative electrode tab 122b of the electrode assembly 12. The electrode terminal 14 may be mounted on the housing 11, with a stable mounting position and mounting state with respect to the housing 11. In some embodiments, the electrode terminal 14 may be mounted on the housing 11 through flanging and riveting.

The adapter 15 is a current collecting component electrically connected between the tab 122 of the electrode assembly 12 and the corresponding electrode terminal 14. The adapter 15 may also be referred to as an adapter connector, a current collecting plate, an adapter piece, or the like. The adapter 15 has conduction properties and is made of a conductive material. The material of the adapter 15 may include aluminum, aluminum alloy, copper, copper alloy, copper-aluminum alloy, and the like. The adapter 15 includes a positive electrode adapter 15a and a negative electrode adapter 15b. The positive electrode tab 122a of the electrode assembly 12 may be electrically connected to the positive electrode terminal 14a through the positive electrode adapter 15a, and the negative electrode tab 122b of the electrode assembly 12 may be electrically connected to the negative electrode terminal 14b through the negative electrode adapter 15b to form a current loop. In some embodiments, the adapter 15 may be connected to the tab 122 of the electrode assembly 12 through welding, abutting, or the like. The adapter 15 may be connected to the electrode terminal 14 through welding, abutting, or the like. The shape of the adapter 15 may be diversified, for example, may be square, round, or specially-shaped.

The insulating member 13 is a component with insulating properties. The insulating member 13 is disposed inside the housing 11, especially between the electrode assembly 12 and a wall portion (for example, the end cover 112) of the housing 11 with the electrode terminal 14. On the basis that the tab 122 of the electrode assembly 12 and the corresponding electrode terminal 14 can be electrically connected, the insulating member 13 may be configured to insulate and isolate the electrode assembly 12 from the wall portion of the housing 11 with the electrode terminal 14, thereby reducing the risk of occurrence of phenomena such as short circuits and current leakage. In addition, the insulating member 13 may also be fixed to the wall portion of the housing 11 with the electrode terminal 14 and abut against the electrode assembly 12 to fill a gap between the electrode assembly 12 and the wall portion of the housing 11, so that the electrode assembly 12 is tightly fixed, ensuring that the electrode assembly 12 does not relatively move or shake during use of the battery cell 10, helping to maintain the structural integrity of the battery cell 10, and reducing the risk of the electrode assembly 12 becoming loose or deformed.

In some embodiments, the housing 11 may further be provided with an explosion-proof valve 16. The explosion-proof valve 16 can be configured to release internal pressure when the internal pressure (or temperature) of the battery cell 10 reaches a threshold.

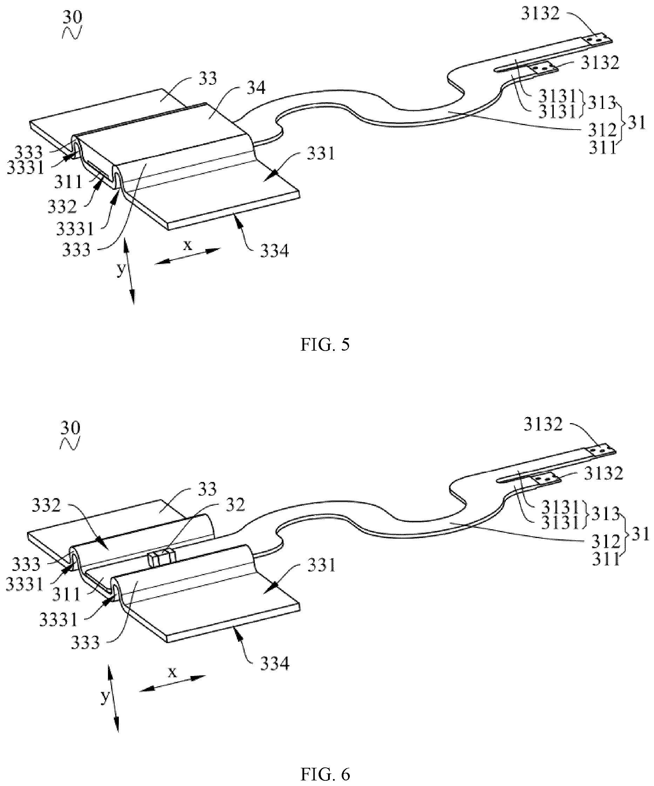

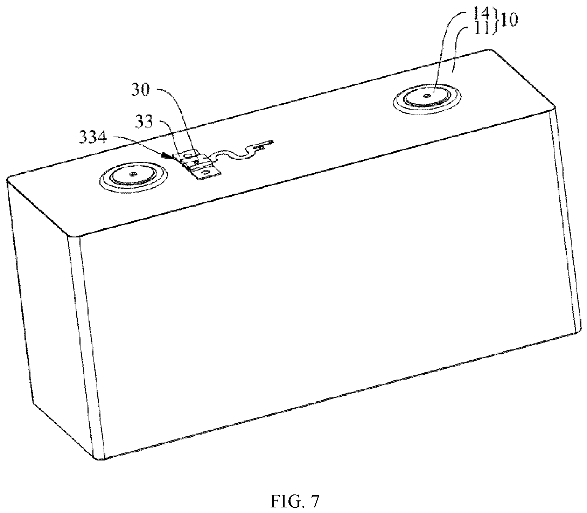

Referring to FIG. 5, FIG. 6, and FIG. 7, some embodiments of this application provide a temperature sampling assembly 30 which can be configured to collect a temperature of a to-be-sampled component. The temperature sampling assembly 30 includes a sampling circuit board 31, a temperature sensing chip 32, and a heat conducting base 33. The sampling circuit board 31 includes a sampling part 311. The temperature sensing chip 32 is mounted at the sampling part 311 and is electrically connected to the sampling circuit board 31. The heat conducting base 33 includes a first side 331 and a second side 334 opposite each other in a thickness direction y. The first side 331 is fixedly adhered to the sampling part 311 through a fixing adhesive 34. The second side 334 is configured to be connected to the to-be-sampled component.

It should be noted that the sampling circuit board 31 is a circuit board for processing and transmitting temperature data. The sampling circuit board 31 may be a rigid circuit board, a flexible circuit board, a rigid-flexible circuit board, or the like. The sampling circuit board 31 is provided with a circuit that can convert the temperature data collected by the temperature sensing chip 32 into an electrical signal and transmit the electrical signal.

The sampling circuit board 31 includes the sampling part 311, and the sampling part 311 is a portion for mounting the temperature sensing chip 32. The sampling part 311 may be located at an end portion, a middle portion, or any other position of the sampling circuit board 31.

It should also be noted that the temperature sensing chip 32 is a chip integrated with a temperature sensor. The temperature sensing chip 32 is mounted at the sampling part 311 of the sampling circuit board 31 and is electrically connected to a corresponding circuit of the sampling part 311 (that is, electrically connected to the sampling circuit board 31). The temperature sensing chip 32 can be configured to measure temperature and output the measured temperature data to the corresponding circuit of the sampling part 311. The temperature sensing chip 32 may be mounted at the sampling part 311 through welding, plugging, or other methods.

It should also be noted that the heat conducting base 33 is a component for mounting the sampling part 311. The heat conducting base 33 includes a first side 331 and a second side 334 opposite each other, and the first side 331 and the second side 334 are disposed opposite each other in the thickness direction y of the heat conducting base 33.

The sampling part 311 may be fixedly adhered to the first side 331 of the heat conducting base 33 through the fixing adhesive 34, ensuring that the temperature sensing chip 32, the sampling part 311, and the heat conducting base 33 are correspondingly disposed and fixed to each other. Since the heat conducting base 33 and the sampling circuit board 31 are components included in the temperature sampling assembly 30, the heat conducting base 33 and the sampling circuit board 31 can be flexibly assembled together without being affected by interference from the to-be-sampled component. Therefore, at least one side of the sampling part 311 in the circumferential direction can be flexibly coated with the fixing adhesive 34 as required, ensuring that at least one side of the sampling part 311 in the circumferential direction can be reliably fixed to the heat conducting base 33 through sufficient fixing adhesive 34. The "circumferential direction" refers to a surrounding direction of a ring formed by a peripheral surface of a corresponding structure (for example, the sampling part 311).

The second side 334 of the heat conducting base 33 may be configured to be connected to the to-be-sampled component. The to-be-sampled component refers to a component whose temperature is to be collected by the temperature sampling assembly 30, for example, may be a component such as a busbar component 20 (as shown in FIG. 2 and FIG. 3) of the battery 1. The heat conducting base 33 and the to-be-sampled component may be connected in a manner including but not limited to welding.

The heat conducting base 33 includes a heat conduction material, has thermal conductivity, and can exert a heat conduction effect, that is, exerting heat exchange and heat conduction effects. When the second side 334 of the heat conducting base 33 is connected to the to-be-sampled component, the heat conducting base 33 can conduct the heat of the to-be-sampled component to the sampling part 311 and the temperature sensing chip 32, allowing the temperature sensing chip 32 to quickly and accurately collect the temperature of the to-be-sampled component. Based on this, the heat conducting base 33 may be made of various materials, for example, aluminum, copper, iron, stainless steel, or aluminum alloy.

Since a distance between the heat conducting base 33 and the temperature sensing chip 32 is small, the heat conducting base 33 can directly conduct heat to the temperature sensing chip 32. Therefore, the fixing adhesive 34 may be a thermally conductive adhesive or not a thermally conductive adhesive.

The heat conducting base 33 may be various structures, for example, a sheet structure.

The heat conducting base 33 may be of various shapes, for example, may be cuboid.

In conclusion, according to the temperature sampling assembly 30 provided in the embodiments of this application, the temperature sensing chip 32 can be mounted at the sampling part 311 of the sampling circuit board 31, and the sampling part 311 of the sampling circuit board 31 is fixedly adhered to the first side 331 of the heat conducting base 33 through the fixing adhesive 34 to form a modular structure. Based on this, the temperature sampling assembly 30 can be modularly assembled independently of the to-be-sampled component. Especially during the operation of fixing the sampling part 311 to the heat conducting base 33, at least one side of the sampling part 311 in the circumferential direction can be flexibly coated with the fixing adhesive 34, ensuring that at least one side of the sampling part 311 can be reliably fixed to the heat conducting base 33 through sufficient fixing adhesive 34. Thus, when the second side 334 of the heat conducting base 33 is connected to the to-be-sampled component, the heat conducting base 33 can conduct the heat of the to-be-sampled component to the sampling part 311 and the temperature sensing chip 32, allowing the temperature sensing chip 32 to quickly and accurately collect the temperature of the to-be-sampled component. In addition, since at least one side of the sampling part 311 is reliably fixed to the heat conducting base 33 through sufficient fixing adhesive 34, the risk of excessive loss and denaturation of the fixing adhesive 34 between the sampling part 311 and the heat conducting base 33 under high temperatures can be reduced, thereby reducing the risk of the sampling circuit board 31 and the temperature sensing chip 32 detaching from the heat conducting base 33, reducing the risk of sampling accuracy decrease or sampling data loss of the temperature sampling assembly 30, maintaining the sampling accuracy and sampling data accuracy of the temperature sampling assembly 30 for a long time, and prolonging the service life of the temperature sampling assembly 30.

Referring to FIG. 5 and FIG. 6, in some embodiments of this application, the fixing adhesive 34 covers at least two sides of the sampling part 311 in the circumferential direction.

It should be noted that in the circumferential direction of the sampling part 311, the fixing adhesive 34 covers at least two sides of the sampling part 311, so that the sampling part 311 can be partially covered or totally covered by the fixing adhesive 34. For example, as shown in FIG. 5, in some embodiments, all sides of the sampling part 311 in the circumferential direction are totally covered by the fixing adhesive 34.

With the use of this solution, at least two sides of the sampling part 311 in the circumferential direction are covered by the fixing adhesive 34, so that a plurality of sides of the sampling part 311 can be covered by the fixing adhesive 34, and the sampling part 311 can be partially covered or even totally covered by the fixing adhesive 34. This allows for more sufficient fixing adhesive 34 between the sampling part 311 and the heat conducting base 33, realizing a wider coverage range, thereby improving the reliability and firmness of adhesion realized by the fixing adhesive 34 between the sampling part 311 and the heat conducting base 33, reducing the risk of excessive loss and denaturation of the fixing adhesive 34 between the sampling part 311 and the heat conducting base 33 under high temperatures, reducing the risk of the sampling part 311 detaching from the heat conducting base 33, reducing the risk of sampling accuracy decrease or sampling data loss of the temperature sampling assembly 30, maintaining the sampling accuracy and sampling data accuracy of the temperature sampling assembly 30 for a long time, and prolonging the service life of the temperature sampling assembly 30.

Referring to FIG. 5 and FIG. 6, in some embodiments of this application, the fixing adhesive 34 is an insulating adhesive.

It should be noted that the fixing adhesive 34 is an insulating adhesive, and the insulating adhesive is a special adhesive for providing insulation protection. The insulating adhesive may be but is not limited to an epoxy resin adhesive, a silicone adhesive, and a polyurethane adhesive.

With the use of this solution, the fixing adhesive 34 is an insulating adhesive, so that the fixing adhesive 34 has good stability and durability and can realize reliable fixed connection of the sampling part 311 to the heat conducting base 33, thereby improving the connection stability and connection reliability between the sampling part 311 and the heat conducting base 33. In addition, the fixing adhesive 34 can have good insulating properties and can provide electrical insulation, thereby reducing the risk of mutual interference between different signals in the sampling part 311, reducing the risk of short circuits, and improving the use performance of the temperature sampling assembly 30. Moreover, the fixing adhesive 34 can form an insulating layer on at least one side of the sampling part 311 in the circumferential direction to protect the sampling part 311 and components on the sampling part 311, thereby reducing the risk of the sampling part 311 and the components on the sampling part 311 being affected by moisture or interference, and prolonging the service life of the temperature sampling assembly 30.

Referring to FIG. 5 and FIG. 6, in some embodiments of this application, the fixing adhesive 34 is an insulating sealant.

It should be noted that the fixing adhesive 34 is an insulating sealant, and the insulating sealant is a special adhesive for sealing and providing insulation protection. The insulating sealant may be but is not limited to an acrylic sealant, a silicone sealant, and a polyurethane sealant.

With the use of this solution, the fixing adhesive 34 is an insulating sealant, so that the fixing adhesive 34 has good stability and durability and can realize reliable fixed connection of the sampling part 311 to the heat conducting base 33, thereby improving the connection stability and connection reliability between the sampling part 311 and the heat conducting base 33. In addition, the fixing adhesive 34 can have good insulating properties and can protect electrical insulation protection, thereby reducing the risk of mutual interference between different signals in the sampling part 311, and reducing the risk of the sampling part 311 and the components on the sampling part 311 being affected by electrical faults or short circuits. Moreover, the fixing adhesive 34 can have good sealing performance and can provide sealing protection, thereby protecting the sampling part 311 and the components on the sampling part 311 from dust, water, and the like, and reducing the risk of damage to the sampling part 311 and the components on the sampling part 311 caused by dust, moisture, moist air, and the like. Furthermore, the fixing adhesive 34 can have good high temperature resistance and chemical corrosion resistance, and the fixing adhesive 34 can maintain stable performance in severe environments, thereby reducing the risk of excessive loss and denaturation of the fixing adhesive 34 under high temperatures, and reducing the risk of the sampling part 311 detaching from the heat conducting base 33.

Referring to FIG. 5 and FIG. 6, in some embodiments of this application, the fixing adhesive 34 covers the temperature sensing chip 32.

It should be noted that when the fixing adhesive 34 has insulating properties, the fixing adhesive 34 may be used to cover the temperature sensing chip 32, especially the fixing adhesive 34 is used to totally cover the temperature sensing chip 32 (that is, to cover the entire temperature sensing chip 32).

With the use of this solution, when the fixing adhesive 34 has insulating properties, the fixing adhesive 34 is used to cover the temperature sensing chip 32, so that the fixing adhesive 34 can protect the temperature sensing chip 32, thereby reducing the risk of damage to the temperature sensing chip 32 caused by external environmental influence such as dust, moisture, and moist air, and reducing the risk of damage to the temperature sensing chip 32 caused by an external impact or vibration. In addition, the fixing adhesive 34 can provide electrical insulation protection for the temperature sensing chip 32, thereby reducing the risk of short circuits between the temperature sensing chip 32 and another component or circuit. Thus, the use reliability of the temperature sensing chip 32 can be improved, and the service life of the temperature sensing chip 32 can be prolonged.

Referring to FIG. 5 and FIG. 6, in some embodiments of this application, the first side 331 is provided with a groove 332, where at least one end of the groove 332 in an extension direction x of the groove is in communication with the outside. The sampling part 311 is mounted in the groove 332, and the fixing adhesive 34 fills the groove 332.

It should be noted that the first side 331 is provided with the groove 332. The groove 332 may be but is not limited to a linear groove. The groove 332 has an extension direction x, a groove depth direction, and a groove width direction. The extension direction x of the groove 332 intersects with the groove depth direction of the groove 332 and intersects with the groove width direction of the groove 332. When the extension direction x of the groove 332 extends linearly, the extension direction x of the groove 332 may be perpendicular to the groove depth direction of the groove 332 and may be perpendicular to the groove width direction of the groove 332.

At least one end of the groove 332 in its extension direction x is in communication with the outside. That is, one end of the groove 332 in its extension direction x is in communication with the outside; or, as shown in FIG. 6, both ends of the groove 332 in its extension direction x are in communication with the outside. Such arrangement facilitates penetration and mounting of the sampling part 311 of the sampling circuit board 31 in the groove 332.

The fixing adhesive 34 fills the groove 332, and the fixing adhesive 34 can cover at least one side of the sampling part 311 in the circumferential direction, to be specific, the fixing adhesive 34 may partially or fully cover the sampling part 311.

With the use of this solution, the first side 331 of the heat conducting base 33 is provided with the groove 332, and at least one end of the groove 332 in its extension direction x is in communication with the outside, facilitating the penetration and mounting of the sampling part 311 of the sampling circuit board 31 in the groove 332. This allows the sampling part 311 to be limited through the groove 332, thereby reducing the risk of the sampling part 311 deviating and detaching from the heat conducting base 33 due to an external impact or vibration, and improving the connection stability and connection reliability between the sampling part 311 and the heat conducting base 33. In addition, the groove 332 can be conveniently filled with the fixing adhesive 34. Based on this, the fixing adhesive 34 can be gathered, allowing the fixing adhesive 34 to cover at least one side of the sampling part 311 in the circumferential direction, thereby facilitating reliable fixed connection between the sampling part 311 and the groove 332 through sufficient fixing adhesive 34, expanding a connection area between the sampling part 311 and the groove 332, and improving the connection stability and connection reliability between the sampling part 311 and the heat conducting base 33. Moreover, when the fixing adhesive 34 is slightly melted under a high temperature, the groove 332 can guide the extension of the fixing adhesive 34 and limit excessive loss of the fixing adhesive 34, thereby reducing the risk of excessive loss and denaturation of the fixing adhesive 34 between the sampling part 311 and the heat conducting base 33 under high temperatures, and reducing the risk of the sampling part 311 detaching from the heat conducting base 33.

Certainly, in other embodiments, the first side 331 may be provided with no groove 332, and the sampling part 311 may be fixed to a surface of the first side 331 through the fixing adhesive 34.

Referring to FIG. 5 and FIG. 6, in some embodiments of this application, the first side 331 is provided with two ribs 333 protruding in a direction away from the second side 334, where the two ribs 333 are spaced apart, and the groove 332 is formed between the two ribs 333.

It should be noted that the first side 331 is provided with two ribs 333. The ribs 333 protrude in the direction away from the second side 334. The ribs 333 may be molded in a manner including but not limited to stamping and bending.

The two ribs 333 are spaced apart. The two ribs 333 may be disposed in parallel or not in parallel. A space between the two ribs 333 can form the groove 332. The formed groove 332 is in communication with the outside at both ends in its extension direction x.

With the use of this solution, the first side 331 is provided with the two ribs 333, so that the ribs 333 can enhance the structural strength and rigidity of the heat conducting base 33, improving the structural reliability of the heat conducting base 33, and prolonging the service life of the heat conducting base 33. In addition, the groove 332 is enclosed by the two ribs 333 spaced apart, so that the groove 332 can be quickly and conveniently molded without sacrificing the structural strength and rigidity of the heat conducting base 33, thereby improving the molding convenience of the groove 332 and maintaining the strength and structural reliability of the heat conducting base 33.

Certainly, in other embodiments, the groove 332 can be formed on the first side 331 using a processing method of removing a material.

Referring to FIG. 5 and FIG. 6, in some embodiments of this application, the rib 333 includes a hollow part 3331 which is through along the extension direction x of the groove 332.

It should be noted that the rib 333 includes the hollow part 3331, and the hollow part 3331 extends along the extension direction x of the groove 332 and runs through the rib 333. The hollow part 3331 may be but is not limited to a hole structures or a groove structure.

With the use of this solution, the rib 333 includes the hollow part 3331 which is through along the extension direction x of the groove 332, so that the weight of the rib 333 can be effectively reduced, thereby facilitating weight reduction of the heat conducting base 33 and facilitating lightening of the temperature sampling assembly 30.

Referring to FIG. 5 and FIG. 6, in some embodiments of this application, the hollow part 3331 penetrates to the second side 334.

It should be noted that the hollow part 3331 penetrates to the second side 334, to be specific, the hollow part 3331 is in communication with the outside of the heat conducting base 33 from the second side 334. In this case, the hollow part 3331 may be a groove structure provided on the second side 334.

With the use of this solution, the hollow part 3331 penetrates to the second side 334, so that the rib 333 including the hollow part 3331 can be quickly and conveniently molded from the second side 334 through punching, bending, or the like, thereby improving the molding convenience of the rib 333.

Referring to FIG. 5 and FIG. 6, in some embodiments of this application, the sampling circuit board 31 includes an extension part 312 and an output part 313, where the extension part 312 is connected between the sampling part 311 and the output part 313. At least part of the extension part 312 is a flexible circuit board and extends in a curved manner.

It should be noted that the sampling circuit board 31 includes the output part 313, and the output part 313 may be located at an end portion of the sampling circuit board 31. The output part 313 is configured to be connected to an external component (such as a battery management system) to output an electrical signal converted from temperature data to the external component. In some embodiments, the output part 313 may be provided with an output port 3132, so as to be electrically connected to the external component through the output port 3132. In some embodiments, according to output requirements, the output part 313 may be provided with at least two output branches 3131, where each output branch 3131 may be provided with the output port 3132.

The extension part 312 is a portion connected between the sampling part 311 and the output part 313. To be specific, the sampling part 311 and the output part 313 are connected through the extension part 312. At least part of the extension part 312 is a flexible circuit board, to be specific, part or all of the extension part 312 is a flexible circuit board. The part of the extension part 312 that is a flexible circuit board may extend in a curved manner, in a curved path which may be but is not limited to a wavy line (for example, a C shape, an S shape, or a U shape), and a zigzag line (for example, a W shape, an N shape, an M shape, or a Z shape).

With the use of this solution, the sampling circuit board 31 can receive temperature data measured by the temperature sensing chip 32 through the sampling part 311 and convert the temperature data into an electrical signal. The sampling circuit board 31 can also transmit the electrical signal converted by the sampling part 311 to the output part 313 through the extension part 312 and output the electrical signal outward through the output part 313. Based on this, the sampling circuit board 31, with a simplified and reliable structure, can convert the temperature data collected by the temperature sensing chip 32 into an electrical signal and transmit the electrical signal.

Based on this, at least part of the extension part 312 is a flexible circuit board and extends in a curved manner, so that this part of the extension part 312 can form a stress-resistant structure and an expansion-resistant structure, allowing for reservation of length variations. Based on this, when the to-be-sampled component experiences vibration or expansion during use, the part of the extension part 312 that is a flexible circuit board and extends in a curved manner can adapt to a change of a distance between the to-be-sampled component and an external component connected to the output part 313, to adaptively undergo stretch or contraction deformation, thereby effectively releasing stress received by the sampling circuit board 31, reducing the risk of damage and breakage of the sampling circuit board 31 caused by the vibration or expansion of the to-be-sampled component, and prolonging the service life of the sampling circuit board 31 and the temperature sampling assembly 30.

Certainly, in other embodiments, another part (such as the output part 313) of the sampling circuit board 31 may be made into a flexible circuit board and extends in a curved manner.

Referring to FIG. 5 and FIG. 6, in some embodiments of this application, the sampling circuit board 31 is a flexible circuit board. To be specific, the sampling circuit board 31 may entirely be a flexible circuit board.

With the use of this solution, the sampling circuit board 31 is a flexible circuit board, so that the sampling circuit board 31 can have good flexibility and bending performance and thus the sampling circuit board 31 is applicable to complicated spaces and narrow spaces, thereby expanding the application range of the sampling circuit board 31, and expanding the application range of the temperature sampling assembly 30. In addition, the sampling circuit board 31 can have good anti-interference capability in vibration and impact environments, so that the structural reliability and use reliability of the sampling circuit board 31 can be optimized. Moreover, molding of sampling circuit boards 31 of various complicated shapes can be facilitated, and the design flexibility, design freedom degree, processing convenience, and portability of the sampling circuit board 31 can be improved.

Certainly, in other embodiments, the sampling circuit board 31 may partially be a flexible circuit board and partially be a rigid circuit board, to be specific, the sampling circuit board 31 is a rigid-flexible circuit board. Alternatively, the sampling circuit board 31 may entirely be a rigid circuit board.

Referring to FIG. 5, FIG. 6, and FIG. 7, in some embodiments of this application, the second side 334 is connected to the to-be-sampled component through welding or through a fastener.

It should be noted that the second side 334 of the heat conducting base 33 may be welded to the to-be-sampled component or connected to the to-be-sampled component through a fastener. A welding method may be but is not limited to laser welding, cold metal transfer welding, plasma arc welding, and argon arc welding. The fastener may be but is limited to a screw, a rivet, and a pin.

With the use of this solution, the second side 334 of the heat conducting base 33 can be connected to the to-be-sampled component through welding or through a fastener. Based on this, the connection reliability and connection firmness between the second side 334 of the heat conducting base 33 and the to-be-sampled component can be improved, and the connection between the second side 334 and the to-be-sampled component is not prone to failure under high temperatures, thereby reducing the risk of the heat conducting base 33 detaching from the to-be-sampled component, and reducing the risk of sampling accuracy decrease or sampling data loss of the temperature sampling assembly 30.

Certainly, in other embodiments, the second side 334 may be connected to the to-be-sampled component in another connection manner that is not prone to failure under high temperatures.

Referring to FIG. 5 and FIG. 6, in some embodiments of this application, the temperature sensing chip 32 is disposed on a side of the sampling part 311 facing away from the heat conducting base 33.

It should be noted that the temperature sensing chip 32 is disposed on the side of the sampling part 311 facing away from the heat conducting base 33. To be specific, the temperature sensing chip 32 is disposed on a side of the sampling part 311 away from the second side 334.

With the use of this solution, the temperature sensing chip 32 is disposed on the side of the sampling part 311 facing away from the heat conducting base 33, so that the temperature sensing chip 32 is not in direct contact with the heat conducting base 33, reducing the possibility of the temperature sensing chip 32 being damaged by the heat conducting base 33 due to impact or vibration, improving the use reliability of the temperature sampling assembly 30, and prolonging the service life of the temperature sensing chip 32 and the temperature sampling assembly 30.

These embodiments are especially suitable for the case where "the fixing adhesive 34 covers the temperature sensing chip 32". To be specific, based on the arrangement of these embodiments, the fixing adhesive 34 can flexibly cover the temperature sensing chip 32 while the fixing adhesive 34 is being applied.

Certainly, in other embodiments, the temperature sensing chip 32 may be disposed on another side of the sampling part 311 in the circumferential direction, for example, a side of the sampling part 311 facing the heat conducting base 33 (that is, close to the second side 334).

Referring to FIG. 5 and FIG. 6, in some embodiments of this application, the temperature sensing chip 32 is welded to the sampling part 311.

With the use of this solution, the temperature sensing chip 32 is welded to the sampling part 311, so that the temperature sensing chip 32 can be firmly and compactly fixed to the sampling part 311. This can reduce the risk of the temperature sensing chip 32 detaching from the sampling part 311, maintain the reliability of data transmission between the temperature sensing chip 32 and the sampling part 311, and improve the sampling accuracy and sampling data accuracy of the temperature sampling assembly 30.

Certainly, in other embodiments, the temperature sensing chip 32 may be mounted at the sampling part 311 in another manner (for example, plugging).

Referring to FIG. 5 and FIG. 6, in some embodiments of this application, the heat conducting base 33 is a sheet structure.

With the use of this solution, the heat conducting base 33 is a sheet structure, so that a surface area of the heat conducting base 33 can be increased, thereby improving the heat exchange efficiency between the heat conducting base 33 and the to-be-sampled component, and improving the heat conduction efficiency. In addition, the rigidity and strength of the heat conducting base 33 can be enhanced, so that the heat conducting base 33 can withstand pressure and load, facilitating the processing of some detailed structures (such as the ribs 333) on the heat conducting base 33, thereby improving the processing convenience and service life of the heat conducting base 33. Moreover, the weight of the heat conducting base 33 can be reduced, thereby facilitating the lightening of the temperature sampling assembly 30.

Certainly, in other embodiments, the heat conducting base 33 may be in another structural form, for example, in a block shape.

Referring to FIG. 5, FIG. 6, and FIG. 7, based on the foregoing embodiments, an embodiment of this application provides a specific example of a temperature sampling assembly 30. The temperature sampling assembly 30 includes a sampling circuit board 31, a temperature sensing chip 32, a heat conducting base 33, and a fixing adhesive 34.

The sampling circuit board 31 includes a sampling part 311, an extension part 312, and an output part 313. The extension part 312 is connected between the sampling part 311 and the output part 313. The sampling circuit board 31 is a flexible circuit board. At least part of the extension part 312 bends in a curved manner.

The temperature sensing chip 32 is welded to the sampling part 311 and is electrically connected to the sampling circuit board 31.

The heat conducting base 33 is a sheet structure. The heat conducting base 33 includes a first side 331 and a second side 334 opposite each other in a thickness direction y. The second side 334 is configured to be connected to the to-be-sampled component through welding or through a fastener. The first side 331 is provided with two ribs 333. The two ribs 333 are spaced apart, and a groove 332 is formed between the two ribs 333. The groove 332 is in communication with the outside at both ends in its extension direction x. The sampling part 311 is mounted in the groove 332, and the temperature sensing chip 32 is located on a side of the sampling part 311 facing away from the heat conducting base 33.

The fixing adhesive 34 fills the groove 332. The sampling part 311 is fixedly adhered to the groove 332 through the fixing adhesive 34. The fixing adhesive 34 covers all sides of the sampling part 311 in the circumferential direction and covers the temperature sensing chip 32. The fixing adhesive 34 is an insulating sealant.

Based on the above structure, the temperature sampling assembly 30 can form a modular structure through the sampling circuit board 31, the temperature sensing chip 32, the heat conducting base 33, and the fixing adhesive 34, so that the temperature sampling assembly 30 is modularly assembled independently of the to-be-sampled component, with high assembly flexibility. Especially, during the operation of fixing the sampling part 311 to the groove 332, the groove 332 can be flexibly filled with the fixing adhesive 34, so that the fixing adhesive 34 is gathered through the groove 332, and the fixing adhesive 34 is promoted to cover all sides of the sampling part 311 in the circumferential direction and the temperature sensing chip 32. Based on this, all sides of the sampling part 311 in the circumferential direction can be reliably fixed to the heat conducting base 33 through sufficient fixing adhesive 34, and when the fixing adhesive 34 is slightly melted under a high temperature, the groove 332 can guide the extension of the fixing adhesive 34 and limit excessive loss of the fixing adhesive 34. Thus, during use of the temperature sampling assembly 30, the risk of excessive loss and denaturation of the fixing adhesive 34 between the sampling part 311 and the heat conducting base 33 under high temperatures can be reduced, and the risk of the sampling part 311 detaching from the heat conducting base 33 can be reduced. As a result, the risk of sampling accuracy decrease or sampling data loss of the temperature sampling assembly 30 can be reduced, the sampling accuracy and sampling data accuracy of the temperature sampling assembly 30 can be maintained for a long time, and the service life of the temperature sampling assembly 30 can be prolonged.

Based on the above structure, the temperature sampling assembly 30 can be welded to the to-be-sampled component through the second side 334 of the heat conducting base 33. Based on this, the temperature sampling assembly 30 can conduct the heat of the to-be-sampled component to the temperature sensing chip 32 through the heat conducting base 33, so that the temperature sensing chip 32 can quickly and accurately collect the temperature of the to-be-sampled component, and the sampling circuit board 31 can receive temperature data measured by the temperature sensing chip 32, convert the temperature data into an electrical signal, and transmit the electrical signals, thereby improving the use performance of the temperature sampling assembly 30. In addition, the connection reliability and connection firmness between the temperature sampling assembly 30 and the to-be-sampled component can be improved, and the connection between the second side 334 and the to-be-sampled component is not prone to failure under high temperatures, thereby reducing the risk of the heat conducting base 33 detaching from the to-be-sampled component, reducing the risk of sampling accuracy decrease or sampling data loss of the temperature sampling assembly 30, maintaining the sampling accuracy and sampling data accuracy of the temperature sampling assembly 30 for a long time, and prolonging the service life of the temperature sampling assembly 30.

Based on the above structure, the temperature sampling assembly 30 can form a stress-resistant structure and an expansion-resistant structure by making the sampling circuit board 31 be a flexible circuit board and making at least part of the extension part 312 extend in a curved manner, thereby allowing for reservation of length variations. Based on this, when the to-be-sampled component experiences vibration or expansion during use, the sampling circuit board 31 of the temperature sampling assembly 30 can adapt to a change of a distance between the to-be-sampled component and an external component connected to the output part 313 through the part that extends in a curved manner, to adaptively undergo stretch or contraction deformation. Thus, the stress received by the sampling circuit board 31 can be effectively released, the risk of damage and breakage of the sampling circuit board 31 caused by the vibration or expansion of the to-be-sampled component can be reduced, the temperature sampling assembly 30 can be applicable to situations where the to-be-sampled component experiences vibration or expansion, the use performance of the temperature sampling assembly 30 can be improved, and the service life of the temperature sampling assembly 30 can be prolonged.

Based on the above structure, by virtue of the fixing adhesive 34 that has insulating properties and covers all sides of the sampling part 311 in the circumferential direction and the temperature sensing chip 32, the temperature sampling assembly 30 can provide electrical insulation protection and physical protection for the sampling part 311 and the temperature sensing chip 32. This can reduce the risk of mutual interference between different signals in the sampling part 311, reduce the risk of the sampling part 311, the components on the sampling part 311, and the temperature sensing chip 32 being affected by electrical faults or short circuits, reduce the risk of the sampling part 311, the components on the sampling part 311, and the temperature sensing chip 32 being damaged due to influence of dust, moisture, moist air, and the like, and reduce the risk of the sampling part 311, the components on the sampling part 311, and the temperature sensing chip 32 being damaged due to external impact or vibration. Thus, the service life of the temperature sampling assembly 30 can be prolonged.

Referring to FIG. 2, FIG. 3, and FIG. 7, some embodiments of this application provide a battery 1. The battery 1 includes the temperature sampling assembly 30 provided in the embodiments of this application.

With the use of this solution, the battery 1 can use the temperature sampling assembly 30 provided in the embodiments of this application, so that the modularized temperature sampling assembly 30 that is less likely to detach under high temperatures can durably, reliably and accurately measure the temperature of the battery 1 and reduce the risk of sampling accuracy decrease or sampling data loss. Thus, an overheating or overcooling situation of the battery 1 can be discovered in a timely manner, the use safety of the battery 1 can be improved, the performance such as cycle life, charge/discharge efficiency, and power density of the battery 1 can be improved, and the charge/discharge strategy and energy utilization efficiency of the battery 1 can be optimized.

Referring to FIG. 2, FIG. 3, and FIG. 7, in some embodiments of this application, the battery 1 includes a battery cell 10, and a second side 334 of a heat conducting base 33 is connected to a housing 11 of the battery cell 10 through welding or through a fastener.

It should be noted that the battery 1 includes at least one battery cell 10, and the battery cell 10 is the smallest unit for storing and outputting electrical energy. The battery cell 10 includes a housing 11, and the housing 11 is a component that isolates the internal environment of the battery cell 10 from the external environment.

The second side 334 of the heat conducting base 33 may be welded to the housing 11 of the battery cell 10 or connected to the housing 11 of the battery cell 10 through a fastener, allowing the heat conducting base 33 to directly conduct the temperature of the battery cell 10 to the temperature sensing chip 32, thereby allowing the temperature sampling assembly 30 to directly measure the temperature of the battery cell 10. A welding method may be but is not limited to laser welding, cold metal transfer welding, plasma arc welding, and argon arc welding. The fastener may be but is limited to a screw, a rivet, and a pin.

With the use of this solution, the second side 334 of the heat conducting base 33 may be connected to the housing 11 of the battery cell 10 through welding or through a fastener. Based on this, the connection reliability and connection firmness between the second side 334 of the heat conducting base 33 and the housing 11 of the battery cell 10 can be improved, and the connection between the second side 334 and the housing 11 of the battery cell 10 is not prone to failure under high temperatures, thereby reducing the risk of the heat conducting base 33 detaching from the housing 11 of the battery cell 10, and reducing the risk of sampling accuracy decrease or sampling data loss of the temperature sampling assembly 30, so that the heat conducting base 33 can durably and reliably conduct the temperature of the battery cell 10 to the temperature sensing chip 32 directly, and the temperature sampling assembly 30 can durably, reliably, and accurately measure the temperature of the battery cell 10 directly.

Certainly, in other embodiments, the second side 334 of the heat conducting base 33 may be connected to the housing 11 of the battery cell 10 in another connection manner that is not prone to failure under high temperatures.

Referring to FIG. 2, FIG. 3, and FIG. 5, in some embodiments of this application, the battery 1 includes a busbar component 20 electrically connected to the battery cell 10, and the second side 334 of the heat conducting base 33 is connected to the busbar component 20 through welding or through a fastener.

It should be noted that the battery 1 includes the busbar component 20, and the busbar component 20 is configured to implement electrical connection between a plurality of battery cells 10. The electrical connection may be a parallel connection, a series connection, or a series-parallel connection, where the series-parallel connection refers to a combination of a series connection and a parallel connection. The busbar component 20 may be but is not limited to a busbar.

The second side 334 of the heat conducting base 33 may be welded to the busbar component 20 or connected to the busbar component 20 through a fastener, allowing the heat conducting base 33 to conduct the temperature of the battery cell 10 connected to the busbar component 20 to the temperature sensing chip 32 through the busbar component 20, thereby allowing the temperature sampling assembly 30 to measure the temperature of the battery cell 10 indirectly. A welding method may be but is not limited to laser welding, cold metal transfer welding, plasma arc welding, and argon arc welding. The fastener may be but is limited to a screw, a rivet, and a pin.

With the use of this solution, the second side 334 of the heat conducting base 33 may be connected to the busbar component 20 through welding or through a fastener. Based on this, the connection reliability and connection firmness between the second side 334 of the heat conducting base 33 and the busbar component 20 can be improved, and the connection between the second side 334 and the busbar component 20 is not prone to failure under high temperatures, thereby reducing the risk of the heat conducting base 33 detaching from the busbar component 20, and reducing the risk of sampling accuracy decrease or sampling data loss of the temperature sampling assembly 30, so that the heat conducting base 33 can durably and reliably conduct the temperature of the battery cell 10 connected to the busbar component 20 to the temperature sensing chip 32 through the busbar component 20, and thus the temperature sampling assembly 30 can durably, reliably, and accurately measure the temperature of the battery 1.

Certainly, in other embodiments, the second side 334 of the heat conducting base 33 may be connected to the busbar component 20 in another connection manner that is not prone to failure under high temperatures.

Referring to FIG. 1, some embodiments of this application provide an electric apparatus, and the electric apparatus includes the battery 1 provided in the embodiments of this application.

With the use of this solution, the electric apparatus can be improved in use safety, optimal performance, and energy utilization efficiency by using the battery 1 provided in the embodiments of this application.

## Claims

1. A temperature sampling assembly (30), **characterized in that** the temperature sampling assembly (30) comprises:
a sampling circuit board (31), comprising a sampling part (311);
a temperature sensing chip (32), mounted at the sampling part (311) and electrically connected to the sampling circuit board (31); and
a heat conducting base (33), wherein the heat conducting base (33) comprises a first side (331) and a second side (334) opposite each other in a thickness direction (y), the first side (331) is fixedly adhered to the sampling part (311) through a fixing adhesive (34), and the second side (334) is configured to be connected to a to-be-sampled component,
wherein the first side (331) is provided with a groove (332), wherein at least one end of the groove (332) in an extension direction (x) of the groove (332) is in communication with the outside, the sampling part (311) is mounted in the groove (332), and the fixing adhesive (34) fills the groove (332),
wherein the first side (331) is provided with two ribs (333) protruding in a direction away from the second side (334), wherein the two ribs (333) are spaced apart, and the groove (332) is formed between the two ribs (333), and
wherein each of the two ribs (333) comprises a hollow part (3331) extending through the respective rib along the extension direction (x) of the groove (332), wherein preferably the hollow part (3331) penetrates to the second side (334).

2. The temperature sampling assembly (30) according to claim 1, wherein the fixing adhesive (34) covers at least two sides of the sampling part (311) in a circumferential direction.

3. The temperature sampling assembly (30) according to claim 1 or 2, wherein the fixing adhesive (34) is an insulating adhesive, preferably an insulating sealant.

4. The temperature sampling assembly (30) according to claim 3, wherein the fixing adhesive (34) covers the temperature sensing chip (32).

5. The temperature sampling assembly (30) according to any one of claims 1 to 4, wherein the sampling circuit board (31) comprises an extension part (312) and an output part (313), wherein the extension part (312) is connected between the sampling part (311) and the output part (313), and at least part of the extension part (312) is a flexible circuit board and extends in a curved manner.

6. The temperature sampling assembly (30) according to any one of claims 1 to 5, wherein the sampling circuit board (31) is a flexible circuit board.

7. The temperature sampling assembly (30) according to any one of claims 1 to 6, wherein the second side (334) is configured to be connected to the to-be-sampled component through welding or through a fastener.

8. The temperature sampling assembly (30) according to any one of claims 1 to 7, wherein the temperature sensing chip (32) is disposed on a side of the sampling part (311) facing away from the heat conducting base (33).

9. The temperature sampling assembly (30) according to any one of claims 1 to 8, wherein the temperature sensing chip (32) is welded to the sampling part (311).

10. The temperature sampling assembly (30) according to any one of claims 1 to 9, wherein the heat conducting base (33) is a sheet structure.

11. A battery (1), **characterized in that** the battery (1) comprises the temperature sampling assembly (30) according to any one of claims 1 to 10.

12. The battery (1) according to claim 11, wherein the battery (1) comprises a battery cell (10), wherein the second side (334) of the heat conducting base (33) is connected to a housing (11) of the battery cell (10) through welding or through a fastener.

13. The battery (1) according to claim 11 or 12, wherein the battery (1) comprises a busbar component (20) electrically connected to the battery cell (10), and the second side (334) of the heat conducting base (33) is connected to the busbar component (20) through welding or through a fastener.

14. An electric apparatus, **characterized in that** the electric apparatus comprises the battery (1) according to any of claims 11 to 13.

## Patentansprüche

1. Temperaturprobenahmeanordnung (30), **dadurch gekennzeichnet, dass** die Temperaturprobenahmeanordnung (30) umfasst:
eine Probenahmeplatine (31), umfassend einen Probenahmeteil (311);
einen Temperaturerfassungschip (32), der an dem Probenahmeteil (311) montiert und elektrisch mit der Probenahmeplatine (31) verbunden ist; und
eine wärmeleitende Basis (33), wobei die wärmeleitende Basis (33) eine erste Seite (331) und eine zweite Seite (334) umfasst, die einander in einer Dickenrichtung (y) gegenüberliegen, wobei die erste Seite (331) über einen Fixierkleber (34) fest an dem Probenahmeteil (311) geklebt ist, und die zweite Seite (334) konfiguriert ist, um mit einer zu messenden Komponente verbunden zu werden,
wobei die erste Seite (331) mit einer Nut (332) versehen ist, wobei mindestens ein Ende der Nut (332) in einer Ausdehnungsrichtung (x) der Nut (332) mit der Außenumgebung in Verbindung steht, das Probenahmeteil (311) in der Nut (332) montiert ist und der Fixierkleber (34) die Nut (332) ausfüllt,
wobei die erste Seite (331) mit zwei Rippen (333) versehen ist, die in einer von der zweiten Seite (334) wegführenden Richtung vorstehen, wobei die beiden Rippen (333) voneinander beabstandet sind und die Nut (332) zwischen den beiden Rippen (333) gebildet ist, und
wobei jede der zwei Rippen (333) einen hohlen Teil (3331) umfasst, der sich entlang der Ausdehnungsrichtung (x) der Nut (332) durch die jeweilige Rippe erstreckt,
wobei der hohle Teil (3331) vorzugsweise bis zur zweiten Seite (334) reicht.

2. Temperaturprobenahmeanordnung (30) nach Anspruch 1, wobei der Fixierkleber (34) in Umfangsrichtung mindestens zwei Seiten des Probenahmeteils (311) bedeckt.

3. Temperaturprobenahmeanordnung (30) nach Anspruch 1 oder 2, wobei der Fixierkleber (34) ein isolierender Kleber, vorzugsweise ein isolierendes Dichtungsmittel, ist.

4. Temperaturprobenahmeanordnung (30) nach Anspruch 3, wobei der Fixierkleber (34) den Temperaturerfassungschip (32) bedeckt.

5. Temperaturprobenahmeanordnung (30) nach einem der Ansprüche 1 bis 4, wobei die Probenahmeplatine (31) einen Verlängerungsteil (312) und einen Ausgangsteil (313) umfasst, wobei der Verlängerungsteil (312) zwischen dem Probenahmeteil (311) und dem Ausgangsteil (313) verbunden ist, und wobei mindestens ein Teil des Verlängerungsteils (312) eine flexible Platine ist und sich gekrümmt erstreckt.

6. Temperaturprobenahmeanordnung (30) nach einem der Ansprüche 1 bis 5, wobei die Probenahmeplatine (31) eine flexible Platine ist.

7. Temperaturprobenahmeanordnung (30) nach einem der Ansprüche 1 bis 6, wobei die zweite Seite (334) konfiguriert ist, um durch Schweißen oder durch ein Befestigungselement mit der zu messenden Komponente verbunden zu werden.

8. Temperaturprobenahmeanordnung (30) nach einem der Ansprüche 1 bis 7, wobei der Temperaturerfassungschip (32) auf einer Seite des Probenahmeteils (311) angeordnet ist, die von der wärmeleitenden Basis (33) abgewandt ist.

9. Temperaturprobenahmeanordnung (30) nach einem der Ansprüche 1 bis 8, wobei der Temperaturerfassungschip (32) an das Probenahmeteil (311) geschweißt ist.

10. Temperaturprobenahmeanordnung (30) nach einem der Ansprüche 1 bis 9, wobei die wärmeleitende Basis (33) eine Folienstruktur ist.

11. Batterie (1), **dadurch gekennzeichnet, dass** die Batterie (1) die Temperaturprobenahmeanordnung (30) nach einem der Ansprüche 1 bis 10 umfasst.

12. Batterie (1) nach Anspruch 11, wobei die Batterie (1) eine Batteriezelle (10) umfasst, wobei die zweite Seite (334) der wärmeleitenden Basis (33) durch Schweißen oder durch ein Befestigungselement mit einem Gehäuse (11) der Batteriezelle (10) verbunden ist.

13. Batterie (1) nach Anspruch 11 oder 12, wobei die Batterie (1) eine Sammelschienenkomponente (20) umfasst, die elektrisch mit der Batteriezelle (10) verbunden ist, und die zweite Seite (334) der wärmeleitenden Basis (33) durch Schweißen oder durch ein Befestigungselement mit der Sammelschienenkomponente (20) verbunden ist.

14. Elektrische Vorrichtung, **dadurch gekennzeichnet, dass** die elektrische Vorrichtung die Batterie (1) nach einem der Ansprüche 11 bis 13 umfasst.

## Revendications

1. Assemblage d'échantillonnage de température (30), **caractérisé en ce que** l'assemblage d'échantillonnage de température (30) comprend :
une carte électronique d'échantillonnage (31), comprenant une partie d'échantillonnage (311) ;
une puce de détection de température (32), montée au niveau de la partie d'échantillonnage (311) et électriquement connectée à la carte électronique d'échantillonnage (31) ; et
une base conductrice de la chaleur (33), la base conductrice de la chaleur (33) comprenant un premier côté (331) et un deuxième côté (334) opposés l'un à l'autre dans une direction d'épaisseur (y), le premier côté (331) est collé à demeure à la partie d'échantillonnage (311) à travers un adhésif de fixation (34), et le deuxième côté (334) est conçu pour être raccordé à un composant à échantillonner,
dans lequel le premier côté (331) est pourvu d'une rainure (332), au moins une extrémité de la rainure (332) dans une direction d'extension (x) de la rainure (332) étant en communication avec l'extérieur, la partie d'échantillonnage (311) étant montée dans la rainure (332), et l'adhésif de fixation (34) remplissant la rainure (332),
dans lequel le premier côté (331) est pourvu de deux nervures (333) saillant dans une direction s'éloignant du deuxième côté (334), les deux nervures (333) étant espacées l'une de l'autre, et la rainure (332) étant formée entre les deux nervures (333), et
dans lequel chacune des deux nervures (333) comprend une partie creuse (3331) s'étendant à travers la nervure respective le long de la direction d'extension (x) de la rainure (332), de préférence la partie creuse (3331) pénétrant vers le deuxième côté (334).

2. Assemblage d'échantillonnage de température (30) selon la revendication 1, dans lequel l'adhésif de fixation (34) couvre au moins deux côtés de la partie d'échantillonnage (311) dans une direction circonférentielle.

3. Assemblage d'échantillonnage de température (30) selon la revendication 1 ou 2, dans lequel l'adhésif de fixation (34) est un adhésif isolant, de préférence un produit d'étanchéité isolant.

4. _ Assemblage d'échantillonnage de température (30) selon la revendication 3, dans lequel l'adhésif de fixation (34) couvre la puce de détection de température (32).

5. Assemblage d'échantillonnage de température (30) selon l'une quelconque des revendications 1 à 4, dans lequel la carte électronique d'échantillonnage (31) comprend une partie d'extension (312) et une partie de sortie (313), la partie d'extension (312) étant raccordée entre la partie d'échantillonnage (311) et la partie de sortie (313), et au moins une partie de la partie d'extension (312) étant une carte électronique flexible et s'étendant de manière courbe.

6. Assemblage d'échantillonnage de température (30) selon l'une quelconque des revendications 1 à 5, dans lequel la carte électronique d'échantillonnage (31) est une carte électronique flexible.

7. Assemblage d'échantillonnage de température (30) selon l'une quelconque des revendications 1 à 6, dans lequel le deuxième côté (334) est conçu pour être raccordé au composant à échantillonner par soudage ou à l'aide d'un dispositif de fixation.

8. Assemblage d'échantillonnage de température (30) selon l'une quelconque des revendications 1 à 7, dans lequel la puce de détection de température (32) est disposée sur un côté de la partie d'échantillonnage (311) qui est orientée à l'opposé par rapport à la base conductrice de la chaleur (33).

9. Assemblage d'échantillonnage de température (30) selon l'une quelconque des revendications 1 à 8, dans lequel la puce de détection de température (32) est soudée à la partie d'échantillonnage (311).

10. Assemblage d'échantillonnage de température (30) selon l'une quelconque des revendications 1 à 9, dans lequel la base conductrice de la chaleur (33) est une structure en feuille.

11. Batterie (1), **caractérisée en ce que** la batterie (1) comprend l'assemblage d'échantillonnage de température (30) selon l'une quelconque des revendications 1 à 10.

12. Batterie (1) selon la revendication 11, la batterie (1) comprenant une cellule de batterie (10), le deuxième côté (334) de la base conductrice de la chaleur (33) étant raccordé à un logement (11) de la cellule de batterie (10) par soudage ou à l'aide d'un dispositif de fixation.

13. Batterie (1) selon la revendication 11 ou 12, la batterie (1) comprenant un composant barre omnibus (20) électriquement connecté à la cellule de batterie (10), et le deuxième côté (334) de la base conductrice de la chaleur (33) étant raccordé au composant barre omnibus (20) par soudage ou à l'aide d'un dispositif de fixation.

14. Appareil électrique, **caractérisé en ce qu'**il comprend la batterie (1) selon l'une quelconque des revendications 11 à 13.
